(19) Europäisches Patentamt
European Patent Office
Office européen des brevets

(11) Veröffentlichungsnummer: **0 145 650**
**B1**

# (12) EUROPÄISCHE PATENTSCHRIFT

(45) Veröffentlichungstag der Patentschrift: **13.01.88**

(21) Anmeldenummer: **84810484.0**

(22) Anmeldetag: **05.10.84**

(51) Int. Cl.⁴: **C 07 F 9/46**, C 07 F 9/50, C 09 K 15/32, C 08 K 5/50, C 08 K 5/53

## (54) 1H-Polyalkyl-Phosphorinane.

(30) Priorität: **11.10.83 US 540238**

(43) Veröffentlichungstag der Anmeldung: **19.06.85 Patentblatt 85/25**

(45) Bekanntmachung des Hinweises auf die Patenterteilung: **13.01.88 Patentblatt 88/2**

(84) Benannte Vertragsstaaten: **BE DE FR GB IT**

(56) Entgegenhaltungen:
**THE JOURNAL OF ORGANIC CHEMISTRY, Band 27, nr. 5, 11. Mai 1962, Seiten 1824-1827, American Chemical Society, US; R. P. WELCHER u. a.: "4-Phosphorinanones. II"**
**THE JOURNAL OF ORGANIC CHEMISTRY, Band 49, Nr. 16, 10. August 1984, Seiten 2906-2909, American Chemical Society, US; S.D. PASTOR u.a.: "2,2,6,6-tetramethyl-4-phosphorinanol: Synthesis and conformational analysis"**

(73) Patentinhaber: **CIBA- GEIGY AG, Klybeckstrasse 141, CH- 4002 Basel (CH)**

(72) Erfinder: **Spivack, John D., 1 Blue Jay Street, Spring Valley New York 10977 (US)**
Erfinder: **Pastor, Stephen D., 112 Union Road, Spring Valley New York 10977 (US)**
Erfinder: **Odorisio, Paul, 269 13th Street, Palisades Park, N.J. 07650 (US)**

**EP 0 145 650 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft neue 1H-Polyalkylphosphorinane, die Zwischenprodukte zu deren Herstellung, die Verwendung als Stabilisatoren, ein Verfahren zur Stabilisierung von organischem Material sowie das damit stabilisierte organische Material.

Organische polymere Verbindungen wie Kunststoffe, Harze, sowie Schmier- und Mineralöle unterliegen dem thermischen, oxidativen und lichtinduzierten Abbau. Eine grosse Vielfalt von Stabilisatoren ist in der Technik zur Stabilisierung einer Vielzahl von Substraten bekannt. Die Wirksamkeit eines Stabilisators hängt von dem stabilisierten Substrat und den Ursachen für dessen Abbau ab. Im allgemeinen ist es schwierig vorauszusagen, welcher Stabilisator der wirksamste und ökonomischste für ein bestimmtes Anwendungsgebiet ist. Beispielsweise kann die Wirksamkeit eines Stabilisators zur Reduktion der Flüchtigkeit einer Verbindung von der Verhinderung der Bindungsspaltung im Substratmolekül abhängen. Um geringe Versprödung und die Erhaltung der Elastizität in einem Polymeren zu bewirken, muss ein Stabilisator übermässige Vernetzung und/oder Kettenbruch verhindern. Die Vermeidung der Vergilbung eines Materials bedingt, dass keine Reaktionen ablaufen, die zu neuen Chromophoren oder Farbkörpern im Substrat oder im Stabilisator führen. Ferner sind die Probleme der Verarbeitungsstabilität und der Substratverträglichkeit zu beachten.

Überraschend wurde gefunden, dass die 1H-Polyalkylphosphorinan-ester und -amide der beschriebenen Erfindung eine ungewöhnliche Kombination wünschenswerter Eigenschaften besitzen, welche diese Verbindungen zu besonders wirksamen und nützlichen Stabilisatoren machen.

Die Verbindungen erweisen sich als besonders nützliche Stabilisatoren für Polyolefine, schlagfestes Polystyrol, Elastomere wie Polybutadien oder Styrol-Butadien-Elastomere oder andere Elastomere, bei denen die Erhaltung der Elastizität, die Verhinderung von Vernetzungsreaktionen, von Versprödung, von Verfärbung, von Geruchsbildung und von Ausschwitzen des Stabilisators grundlegende Anforderungen an die Qualität eines Stabilisators darstellen.

Weiter wurde gefunden, dass die Kohlenstoff-substituierten 1H-Phosphorinane wie die Polyalkyl-4-hydroxy-1H-phosphorinane oder die Polyalkyl-4-amino-1H-phosphorinane, die als Edukte zur Synthese der oben erwähnten Ester und Amide verwendet werden, ebenfalls neu sind und auch Gegenstand der vorliegenden Erfindung sind.

Bezüglich der letzterwähnten Edukte ist zu bemerken, dass 1-Alkyl- und 1-Aryl-phosphorinanone von R.P. Welcher und N.E. Day in J. Org. Chem., 27 (1962), 1824 und Kohlenstoffunsubstituierte 1H-Phosphorinane von L.D. Quin in "The Heterocyclic Chemistry of Phosphorus", New York, J. Wiley, 1981 Kapitel 3 beschrieben worden sind.

Die vorliegende Erfindung betrifft Verbindungen der Formel I

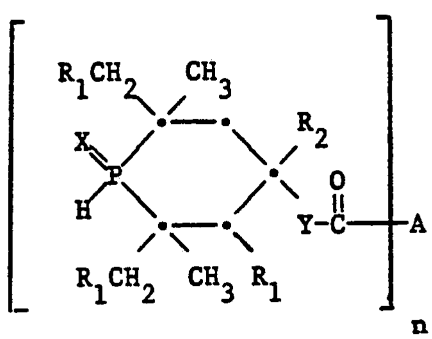

(I)

worin

$R_1$ und $R_2$ unabhängig voneinander Wasserstoff oder $C_1$-$C_8$-Alkyl;

X -0-, -S- oder ein freies Elektronenpaar

Y -0- oder $N(R_3)$, worin $R_3$ Wasserstoff oder $C_1$-$C_{12}$-Alkyl ist

bedeuten

und worin n = 1-5 ist

und worin

A n-wertiges $C_1$-$C_{20}$-Alkyl, n-wertiges $C_5$-$C_6$-Cycloalkyl, n-wertiges $C_6$-$C_{20}$-Aryl oder $C_7$-$C_{10}$-Aralkyl, das durch $C_1$-$C_4$-Alkyl und Hydroxyl substituiert ist, oder ein n-wertiges Radikal einer 5-7 gliedrigen heterocyclischen Verbindungen bedeutet.

$R_1$ und $R_2$ als $C_1$-$C_8$-Alkyl bedeuten z. B. geradkettiges oder verzweigtes Alkyl wie Methyl, Ethyl, n-Propyl, Isopropyl, n-Butyl, sec.-Butyl, tert.-Butyl, n-Pentyl, tert.-Pentyl, n-Hexyl, 2-Ethylhexyl, n-Octyl und 1,1,3,3-Tetramethylbutyl.

$R_3$ als $C_1$-$C_{12}$-Alkyl umfasst die für $R_1$ und $R_2$ oben beschriebenen Gleider und zusätzlich beispielsweise Nonyl, Decyl und Dodecyl.

A als einwertiges Alkyl bedeutet $C_1$-$C_{20}$-Alkyl umfassend die für $R_1$, $R_2$ und $R_3$ vorstehend beschriebenen Glieder und zusätzlich z. B. Tridecyl, Tetradecyl, Pentadecyl, Hexadecyl, Heptadecyl und Octadecyl, oder $C_5$-$C_6$-Cycloalkyl wie Cyclopentyl oder Cyclohexyl.

A als einwertiges Aryl bedeutet z. B. Phenyl, das durch $C_1$-$C_4$-Alkyl und/oder Hydroxyl substituiert sein kann, wie Tolyl, Xylyl, Mesityl, 3,5-Dimethyl-4-hydroxyphenyl, 3,5-Di-tert.-butyl-4-hydroxyphenyl oder $C_7$-$C_{10}$-Aralkyl, das durch $C_1$-$C_4$-Alkyl und Hydroxyl substituiert ist, wie 3,5-Di-tert.-butyl-4-hydroxybenzyl oder bevorzugt 2-(3,5-Di-tert.-butyl-4-hydroxyphenyl)ethyl.

A als zweiwertiger Substituent bedeutet geradkettiges oder verzweigtkettiges $C_2$-$C_{10}$-Alkylen wie z. B. Ethylen, Trimethylen, Tetramethylen, Pentamethylen, 2,2-Dimethyl-propan-1,3-diyl, Hexamethylen, Heptamethylen, Octamethylen, Decamethylen, 2,2-Pentamethylen-propan-1,3-diyl und Cyclohexylen oder $C_6$-$C_{10}$-Arylen wie Phenylen, durch $C_1$-$C_4$-Alkyl substituiertes Phenylen oder Naphtylen.

A als drei-, vier- oder fünfwertiger Substituent bedeutet z. B. eine Gruppe der folgende Formeln

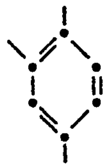 , 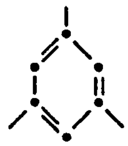 , 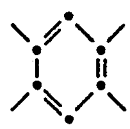 , 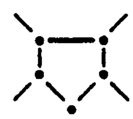 , 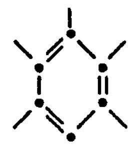 .

A als Radikal einer 5-7 gliedrigen heterocyclischen Verbindung bedeutet eine Gruppe der folgende Formeln beispielsweise

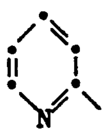 , 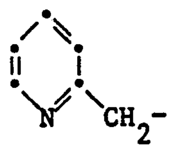 , 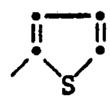 , 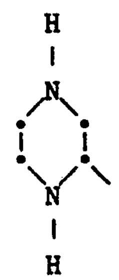 , 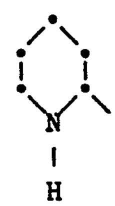 ,

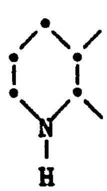 , 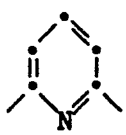 , 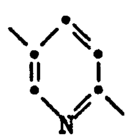 , 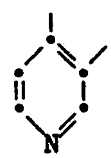 , 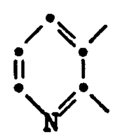 , 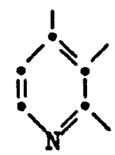 .

Bevorzugt werden Verbindungen worin
$R_1$ und $R_2$ Wasserstoff,
X -0- oder ein freies Elektronenpaar,
Y -0-,
n 1 oder 2 wobei 2 besonders bevorzugt,
A $C_1$-$C_8$-Alkyl oder durch $C_1C_4$-Alkyl und Hydroxyl substituiertes $C_7$-$C_{10}$-Aralkyl besonders bevorzugt 2-(3,5-Di-tert.-butyl-4-hydroxyphenyl)-ethyl im Fall von $n = 1$ und $C_4$-$C_8$-Alkylen im Fall von $n = 2$
bedeuten.

Die erfindungsgemässen Verbindungen lassen sich durch Veresterung oder Amidierung aus Säuren der Formel $A\text{-}(COOH)_n$ (oder deren Derivaten wie Halogeniden, Anhydriden oder niedrigen Alkylestern, bevorzugt Methylestern) und einer Verbindung der Formel II

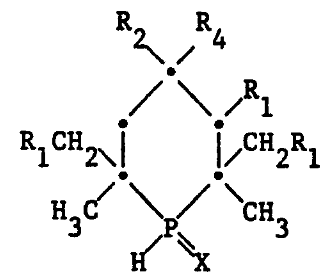

(II),

worin
R Hydroxyl oder -$NHR_3$ bedeutet, wobei Hydroxyl bevorzugt ist; und
n, $R_1$, $R_2$, $R_3$ und X die vorstehend erwähnten Bedeutungen haben
herstellen.

Besonders bevorzugt werden $C_2$-$C_{18}$-Carbonsäuren wie Essigsäure, Propionsäure, Buttersäure, 2,2-Dimethylpropionsäure, Heptansäure, Laurinsäure, Myristinsäure, Palmitinsäure, Stearinsäure, Cyclohexancarbonsäure, Benzoesäure, 3-(3,5-Di-tert.-butyl-4-hydroxyphenyl)-propionsäure, Bernsteinsäure, Adipinsäure, Azelainsäure, Sebacinsäure, Phtalsäure, 1,1-Cyclohexan-diessigsäure, 1,2,4-Benzoltricarbonsäure, 1,3,5-Benzoltricarbonsäure, 1,3,5-Benzoltricarbonsäure, 1,2,4,5-Benzoltetracarbonsäure, Benzolpentacarbonsäure, 1,2,3,4-Cyclopentantetracarbonsäure, 2-Thiophencarbonsäure, 2-Pyrazincarbonsäure, 2-Pyridylessigsäure, 2-Pyridincarbonsäure, 2,3-Piperidindicarbonsäure, 2,6-Pyridindicarbonsäure, 2,5-Pyridindicarbonsäure, 3,4-Pyridindicarbonsäure und 2,3,4-Pyridintricarbonsäure.

Die erfindungsgemässen Verbindungen der Formel II, worin $R_4$ Hydroxyl bedeutet, lassen sich wie folgt herstellen:

In einer ersten Stufe wird Phenylphosphin mit Divinylketonen der Formel III umgesetzt

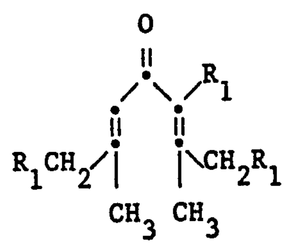

(III)

wodurch Phosphorinanone der Formel IV erhaleten werden

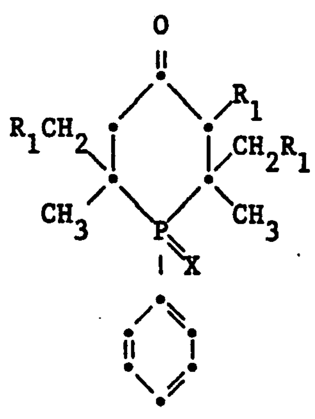

(IV)

Dieses Verfahren wird von R.P. Welcher und N.E. Day, J. Org. Chem. 27 (1962), 1824 beschrieben.

Bevorzugte Divinylketone sind Phoron und 3,4,7-Trimethyl-nona-3,6-dien-5-on.

Die Carbonylgruppe gemäss Formel IV wird durch Umsetzung einer Verbindung der Formel IV mit Ethylenglycol unter Verwendung eines Säurekatalysators nach bekannter Methode (z. B. J. March, Advanced Organic Chemistry, p. 810, New York, Mc Graw-Hill, 1977) geschützt, wodurch das 1,3-Dioxalen der Formel V erhalten wird.

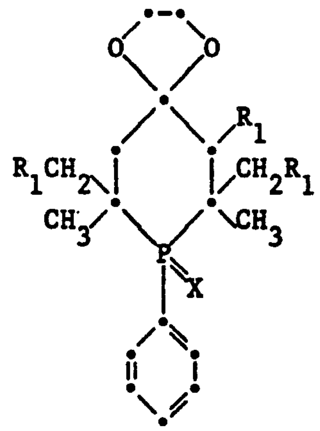

(V).

Um das 1H-Phosphorinan der Formel VI zu erhalten,

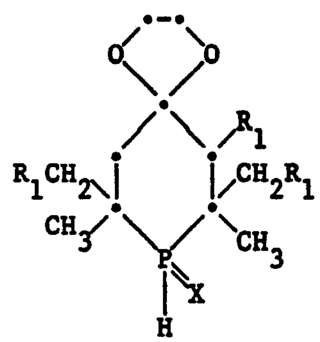

(VI)

wird der Phenylsubstituent von V reduktiv abgespalten.

Als besonders geeignetes Verfahren erweist sich die Reduktion von V mit metallischem Lithium in einem geeigneten Lösungsmittel wobei Tetrahydrofuran besonders bevorzugt ist.

Die Abspaltung der 1,3-Dioxolan-Schutzgruppe führt zu 1H-Phosphorinanon der Formel VII.

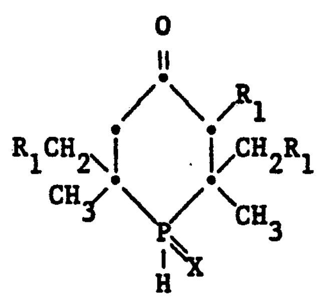

(VII).

Von den verschieden bekannten Methoden zur Entfernung der 1,3-Dioxolan-Schutzgruppe erweist sich die Behandlung mit wässriger Salzsäure als besonders geeignet.

Die Reduktion der Ketogruppe von VII nach bekannten Methoden wie durch Umsetzung mit Lithiumtetrahydroaluminat, Natriumborhydrid, Diisobutylaluminiumhydrid, katalytische Hydrierung, Reduktion durch Wasserstoff in situ und weiteren führt zum Alkohol der Formel II, worin $R_2$ Wasserstoff bedeutet.

Durch Zugabe von Metallalkylen (wie Methyl-Grignard, Methyl-Lithium, Butyl-Lithium und andere) nach bekannten Methoden werden die tertiären Alkohole der Formel II erhalten, worin $R_2$ $C_1$-$C_8$-Alkyl bedeutet.

Die Verbindungen der Formel II worin $R_4$ $-NHR_3$ bedeutet, werden durch konventionelle reduktive Aminierung wie die reduktive Aminierung von VII mit einem Amin der Formel $H_2NR_3$ und Natriumborhydrid erhalten.

Die Umwandlung von Phosphor(III)-Verbindungen (Verbindungen der Formeln I oder II, worin X ein freies Elektronenpaar ist) in Phosphor(V)-Verbindungen (Verbindungen der Formeln I oder II, worin X Sauerstoff ist) einschliesslich der Oxidation mit meta-Chlorperoxybenzoesäure, Sauerstoff oder Wasserstoffperoxid ist bekannt, wobei die Behandlung mit wässrigem Wasserstoffperoxid die Methode der Wahl ist. Die Phosphor(III)-Verbindung wird in einem geeigneten Lösungsmittel wie Toluol gelöst und mit einer wässrigen Wasserstoffperoxidlösung gemischt, bis die Oxidation vollzogen ist.

Die Verbindungen der Formeln I und II, worin X Schwefel bedeutet, lassen sich durch bekannte Methoden, wie die Umsetzung des entsprechenden Phosphins (Verbindungen der Formeln I und II, worin X ein freies Elektronenpaar bedeutet) mit Schwefel, herstellen.

Die erfindungsgemässen 1H-Phosphorinan-Ester und -Amide lassen sich als Stabilisatoren für organisches Material, wie beispielsweise Kunststoffe, Elastomere oder Harze verwenden; sie lassen sich darüber hinaus als Stabilisatoren für Mineralöle oder synthetische Öle beispielsweise für Schmieröle oder Wärmeaustauscheröle und andere, einsetzen.

Die erfindungsgemässen Verbindungen sind besonders bevorzugte Stabilisatoren für polyolefinische Substrate, wie Polyethylene und Polypropylen, Polystyrol einschliesslich schlagfestes Polystyrol, Butadienkautschuk, Acrylnitril/Butadien/Styrol, Styrol/Butadienkautschuk, Polyisopren und Naturkautschuk.

Generell kann man die Stabilisatoren für folgende polymere Substrate verwenden:

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z. B. von Cyclopenten oder Norbornen.

2. Mischungen der unter 1) genannten Polymeren, z. B. Mischungen von Polypropylen mit Polyisobutylen.

3. Copolymere von Mono- und Diolefinen untereinander oder mit anderen Vinylmonomeren, wie z. B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

4. Polystyrol, Poly-(p-methylstyrol).

5. Copolymere von Styrol oder α-Methylstyrol mit Dienen oder Acrylderivaten, wie z. B. Styrol-Butadien, Styrol-Acrylnitril, Styrol-Alkylmethacrylat, Styrol-Maleinanhydrid, Styrol-Acrylnitril-Methylacrylat; Mischungen von hoher Schlagzähigkeit aus Styrol-Copolymeren und einem anderen Polymer wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol, wie z. B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z. B. als sogenannte ABS, MBS, ASA oder AES-Polymere bekannt sind.

7. Halogenhaltige Polymere, wie z. B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyral, Polyallylphthalat, Polyallylmelamin.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere wie z. B. Ethylenoxid enthalten.

13. Polyphenylenoxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylen-isophthalamid, sowie deren Block-Copolymere mit Polyethern wie z. B. mit Polyethylenglykol, Polypropylenglykol oder Polytetramethylenglykol.

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern

mit Hydroxylendgruppen ableiten.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten wie z. B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten, oder Epoxidharzen vernetzt sind.

25. Vernetzte Epoxidharze, die sich von Polyepoxiden ableiten, z. B. von Bis-glycidylethern oder von cycloaliphatischen Diepoxiden.

26. Natürliche Polymere wie Cellulose Naturkautschuk Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren wie z. B. PP/EPDM, Polyamid 6/EPDM oder ABS, PVC/EVA, PVC/ABS, PVC/MBS, PC/ABS, PBTP/ABS.

28. Natürliche und synthetische organische Stoffe, die reine monomere Verbindungen oder Mischungen von solchen darstellen, beispielsweise Mineralöle, tierische oder pflanzliche Fette, Öle und Wachse, oder Öle, Wachse und Fette auf Basis svnchetischer Ester (z. B. Phthalate, Adipate, Phosphate oder Trimellithate), sowie Abmischungen synthetischer Ester mit Mineralölen in beliebigen Gewichtsverhältnissen, wie sie z. B. als Spinnpräparationen Anwendung finden, sowie deren wässrigen Emulsionen.

29. Wässrige Emulsionen natürlicher oder synthetischer Kautschuke, wie z. B. Naturkautschuk-Latex oder Latices von carboxylierten Styrol-Butadien-Copolymeren.

Die Erfindung betrifft weiterhin ein Verfahren zum Stabilisieren von organischem Material aus der Gruppe der Kunststoffe, Elastomere, Harze, Mineralöle und synthetischen Öle gegen oxidativen, thermisch- oder strahlungsinduzierten Abbau dadurch gekennzeichnet dass man dem Material mindestens eine Verbindung der Formel I wie oben beschrieben zusetzt.

Die erfindungsgemässen Stabilisatoren werden den Kunststoffen in Mengen von 0,01 bis 5 Gew.-% bezogen auf das stabilisierte Material zugemischt. Je nach Verwendung und Substrat wird die Stabilisatormenge variiert. Bevorzugt verwendet man 0,05 bis 2 Gew.-% des Stabilisators, besonders bevorzugt 0,1 bis 1 Gew.-%.

Die Einarbeitung der erfindungsgemässen Stabilisatoren in das Substrat kann nach den in der Technik üblichen Methoden vor oder während der Formgebung, oder auch durch Mischen mit dem Substrat in trockener Form, oder als suspendierte oder emulgierte Verbindung durch Mischen mit einer Lösung, Suspension oder Emulsion des Substrates erfolgen.

Die so durch die erfindungsgemässen Verbindungen stabilisierten Substratzusammensetzungen können zusätzlich auch weitere übliche Additive enthalten, wie beispielsweise

**1. Antioxidantien**

**1.1. Alkylierte Monophenole**

2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-($\alpha$-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

**1.2. Alkylierte Hydrochinone**

2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

**1.3. Hydroxylierte Thiodiphenylether**

2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

**1.4. Alkyliden-Bisphenole**

2,2'-Methylen-bis-(6-tert.butyl-4-methylphenol)
2,2'-Methylen-bis-(6-tert.butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2,2'-Ethyliden-bis-(4,6-di-tert.butylphenol)
2,2'-Ethyliden-bis-(6-tert.butyl-4-isobutylphenol)
2,2'-Methylen-bis-[6-(α-methylbenzyl)-4-nonylphenol]
2,2'-Methylen-bis-[6-(α,α-dimethylbenzyl)-4-nonylphenol]
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercapto-butan
Ethylenglycol-bis-[3,3-bis-(3'-tert.butyl-4'-hydroxyphenyl)-butyrat]
Di-(3-tert.butyl-4-hydroxy-5-methylphenyl)-dicyclopentadien
Di-[2-(3'-tert.butyl-2'-hydroxy-5'-methyl-benzyl)-6-tert.butyl-4-methyl-phenyl]-terephthalat.

**1.5 Benzylverbindungen**

1,3,5-Tri-(3,5-di-tert.butyl-4-hydroxybenzyl)-2,4,6-trimethylbenzol
Di-(3,5-di-tert.butyl-4-hydroxybenzyl)-sulfid
3,5-di-tert.butyl-4-hydroxybenzyl-mercaptoessigsäure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-Di-tert.butyl-4-hydroxybenzyl-phosphonsäure-dioctadecylester
3,5-Di-tert.butyl-4-hydroxybenzyl-phosphonsäure-monoethylester, Calcium-salz.

**1.6. Acylaminophenole**

4-Hydroxy-laurinsäureanilid
4-Hydroxy-stearinsäureanilid
2,4-Bis-octylmercapto-6-(3,5-di-tert.butyl-4-hydroxyanilino)-s-triazin
N-(3,5-di-tert.butyl-4-hydroxyphenyl)-carbaminsäureoctylester.

**1.7. Ester der β-(3,5-Di-tert.butyl-4-hydroxyphenyl)-propionsäure** mit ein- oder mehrwertigen Alkoholen, wie z. B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

**1.8. Ester der β-(5-tert.butyl-4-hydroxy-3-methylphenyl)-propionsäure** mit ein- oder mehrwertigen Alkoholen, wie z. B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

**1.9. Amide der β-(3,5-Di-tert.butyl-4-hydroxyphenyl)-propionsäure,** wie

z. B.
N,N'-Di-(3,5-di-tert.butyl-4-hydroxyphenylpropionyl)-hexamethylen-diamin
N,N'-Di-(3,5-di-tert.butyl-4-hydroxyphenylpropionyl)-trimethylen-diamin
N,N'-Di-(3,5-di-tert.butyl-4-hydroxyphenylpropionyl)-hydrazin

**2. UV-Absorber und Lichtschutzmittel**

**2.1. 2-(2'-Hydroxyphenyl)-benztriazole,** wie z. B. das 5'-Methyl-, 3',5'-Di-tert.butyl-, 5'-Tert.butyl-, 5'-(1,1,3,3-Tetramethyl-butyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Ditert.amyl- 3',5'-Bis-(α,α-dimethylbenzyl)-Derivat.

**2.2. 2-Hydroxybenzophenone,** wie z. B. das 4-Hydroxy-, 4-Methoxy-, 4-Octoxy-, 4-Decyloxy-, 4-Dodecyloxy-, 4-Benzyloxy-, 4,2',4'-Tri-hydroxy-, 2'-Hydroxy-4,4'-dimethoxy-Derivat.

**2.3. Ester von gegebenenfalls substituierten Benzoesäuren,** wie z. B. 4-Tert.butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

**2.4. Acrylate,** wie z. B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäuremethylester, N-(β-Carbomethoxy-β-cyanovinyl)-2-methyl-indolin,

**2.5. Nickelverbindungen,** wie z. B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern wie vom Methyl- oder Ethylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.

**2.6. Sterisch gehinderte Amine,** wie z. B. Bis-(2,2,6,6-tetramethyl-piperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxy-ethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethyl-piperazinon).

**2.7. Oxalsäurediamide,** wie z. B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyl-oxanilid und dessen Gemisch mit 2-Ethoxy-2'-ethyl-5,4'-di-tert.butyl-oxanilid, Gemische von ortho- und para-Methoxy- sowie von o- und p-Ethoxy-di-substituierte Oxaniliden.

**3. Metalldesaktivatoren,** wie z. B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.

**4. Phosphite und Phosphonite,** wie z. B. Triphenylphosphit, Diphenylalkylphosphite, Phenyldialkylphosphite, Tri-(nonylphenyl)-phosphit, Trilaurylphosphit, Trioctadecylphosphit, Distearylpentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit.

**5. Peroxidzerstörende Verbindungen,** wie z. B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

**6. Polyamidstabilisatoren,** wie z. B. Kupfersalze in Kombination mit Jodiden und/oder Phosphorverbindungen und Salze des zweiwertigen Mangans.

**7. Basische Co-Stabilisatoren,** wie z. B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

**8. Nukleierungsmittel,** wie z. B. 4-tert.Butylbenzoesäure, Adipinsäure, Diphenylessigsäure.

**9. Füllstoffe und Verstärkungsmittel,** wie z. B. Calciumcarbonat, Silikate, Glasfasern, Asbest, Talk, Kaolin, Glimmer, Bariumsulfat, Metalloxide und -hydroxide, Russ, Graphit.

**10. Sonstige Zusätze,** wie z. B. Weichmacher, Gleitmittel, Emulgatoren, Pigmente, Optische Aufheller, Flammschutzmittel, Antistatika, Treibmittel und Thiosynergisten wie beispielsweise Dilaurylthiodipropionat oder Distearylthiodipropionat.

Bei Verwendung der erfindungsgemässen Stabilisatoren in Mineralölen oder synthetischen Ölen können zusätzlich zu den oben erwähnten Additiven noch weitere Zusatzstoffe eingesetzt werden.

Zu diesen Stoffen zählen beispielsweise:

**11. Aminische Antioxidantien:**

N,N'-Di-isopropyl-p-phenylendiamin
N,N'-Di-sec.-butyl-p-phenylendiamin
N,N'-Bis(1,4-di-methyl-pentyl)-p-phenylendiamim
N,N'-Bis(1-ethyl-3-methyl-pentyl)-p-phenylendiamin
N,N'-Bis(1-methyl-heptyl)-p-phenylendiamin
N,N'-Dicyclohexyl-p-phenylendiamin
N,N'-Diphenyl-p-phenylendiamim
N,N'-Di-(naphthyl-2-)-p-phenylendiamim
N-Isopropyl-N'-phenyl-p-phenylendiamin
N-(1,3-Dimethyl-butyl)-N'-phenyl-p-phenylendiamin
N-(1-Methyl-heptyl)-N'-phenyl-p-phenylendiamin
N-Cyclohexyl-N'-phenyl-p-phenylendiamin
4-(p-Toluol-sulfonamido)-diphenylamin
N,N'-Dimethyl-N,N'-di-sec.-butyl-p-phenylendiamin
Diphenylamin
4-Isopropoxy-diphenylamin
N-Phenyl-1-naphthylamin
N-Phenyl-2-naphthylamin
octyliertes Diphenylamin
4-n-Butylamino-phenol
4-Butyrylamino-phenol
4-Nonanoylamino-phenol
4-Dodecanoylamino-phenol
4-Octadecanoylamino-phenol
Di-(4-methoxy-phenyl)-amin
2,6-Di-tert.-butyl-4-dimethylamino-methyl-phenol
2,4'-Diamino-diphenylmethan

4,4'-Diamino-diphenylmethan
N,N,N,N'-Tetramethyl-4,4'-diamino-diphenylmethan
1,2-Di-(phenylamino)-ethan
1,2-Di-[(2-methyl-phenyl)-amino]-ethan
1,3-Di-(phenylamino)-propan
(o-Tolyl)-biguanid
Di-[4-(1',3'-dimethyl-butyl)-phenyl]amin.

**12. Metallpassivatoren:**

für Kupfer, z. B.: Benztriazol, Tetrahydrobenztriazol, 2-Mercaptobenzthiazol, 2,5-Dimercaptothiadiazol, Salicyliden-propylendiamin, Salze von Salicylaminoguanidin.

**13. Rost-Inhibitoren:**

a) Organische Säuren, ihre Ester, Metallsalze und Anhydride, z. B.: N-Oleoyl-sarcosin, Sorbitan-mono-oleat, Blei-naphthenat, Dodecenylbernsteinsäure-anhydrid, Alkenylbernsteinsäure-Halbester, 4-Nonylphenoxyessigsäure.
b) Stickstoffhaltige Verbindungen, z. B.:
I. Primäre, sekundäre oder tertiäre aliphatische oder cycloaliphatische Amine und Amin-Salze von organischen und anorganischen Säuren, z. B. öllösliche Alkylammoniumcarboxylate.
II. Heterocyclische Verbindungen z. B.: Substituierte Imidazoline und Oxazoline.
c) Phosphorhaltige Verbindungen, z. B.: Aminsalze von Phosphorsäurepartialestern.
d) Schwefelhaltige Verbindungen, z. B.: Barium-dinonylnaphthalin-sulfonate, Calciumpetroleum-sulfonate.

**14. Viskositätsindex-Verbesserer:**

Polymethacrylate, Vinylpyrrolidon/Methacrylat-Copolymere, Polybutene, Olefin-Copolymere, Styrol/Acrylat-Copolymere.

**15. Stockpunktniedriger:**

Polymethacrylat, alkylierte Naphthalinderivate.

**16. Dispergiermittel/Tenside:**

Polybutenylbernsteinsäure-imide, Polybutenylphosphonsäurederivate, basische Magnesium-, Calcium-, und Bariumsulfonate und -phenolate.

**17. Verschleißschutz-Additive:**

Schwefel und/oder Phosphor und/oder Halogen enthaltende Verbindungen, wie geschwefelte pflanzliche Öle, Zinkdialkyldithiophosphate, Tritolyl-phosphat, chlorierte Paraffine, Alkyl- und Aryldisulfide.

**Beispiel 1:**

**4-Hydroxy-2,2,6,6-tetramethyl-1H-phosphorinan**

a) **4,4-Ethylendioxy-1-phenyl-2,2,6,6-tetramethyl-phosphorinan**
In einem mit einer Dean-Stark-Falle versehenen Kolben wird eine Lösung von 0.73 g p-Toluolsulfonsäure in 150 ml Ethylenglycol und 800 ml Toluol hergestellt, durch die anschliessend während 1 Std. Stickstoff

durchgeblasen wird. Zu dieser Lösung werden 10 g (0.04 Mol) 1 Phenyl-2,2,6,6-tetramethyl-4-phosphorinanon zugegeben. Das Zweiphasensystem wird zum Rückfluss erhitzt und 26 ml eines Wasser-Ethylenglycol-Azeotrops werden innerhalb von 20 Std. gesammelt. Das Reaktionsgemisch wird mit gesättigter Natriumbicarbonat-Lösung und Wasser gewaschen und über wasserfreiem Kaliumcarbonat getrocknet, darauf das Lösungsmittel im Vakuum entfernt und der Rückstand unter vermindertem Druck destilliert, worauf 9.2 g (78 %) einer farblosen Flüssigkeit mit Sdp. 134-140°C (0.3 mm Hg) erhalten werden.

| Analyse | P |
|---|---|
| Berechnet für $C_{17}H_{25}O_2P$: | 10.6 |
| Gefunden | 10.6 |

b) **4,4-Ethylendioxy-2,2,6,6-tetramethyl-1H-phosphorinan**
In einem flammengetrockneten Kolben wird unter Stickstoff eine Lösung von 8.0 g (0.027 Mol) 4,4-Ethylendioxy-1-phenyl-2,2,6,6-tetramethyl-phosphorinan und 0.8 g (0.115 Mol) blankem Lithiummetall in 40 ml wasserfreiem Tetrahydrofuran hergestellt. Die Lösung wird während 5 Min. unter Rückfluss gekocht und dann bei Raumtemperatur gerührt während die Lösung sich nach 30 Minuten tiefrot färbt. Das Reaktionsgemisch wird 48 Std. gerührt dann auf -10°C gekühlt und die Reaktion durch Zugabe von Wasser bis zum Verschwinden der roten Farbe gestoppt und das Gemisch mit Diethylether extrahiert. Die vereinigten Etherextrakte werden über wasserfreiem Kaliumcarbonat getrocknet, darauf das Lösungsmittel im Vakuum entfernt und der Rückstand unter vermindertem Druck destilliert worauf 1.6 g (27 %) einer farblosen Flüssigkeit mit Sdp. 65-69°C (0.05 mm Hg) erhalten wird.
Hochaufgelöstes Massenspektrum:

| | |
|---|---|
| Berechnet für $C_{11}H_{21}O_2P$ | 216.1278 |
| Gefunden | 216.1278 |

c) **2,2,6,6-Tetramethyl-1H-phosphorinan-4-on**
In einem Kolben wird unter Stickstoff eine Lösung von 43.2 g (0.2 Mol) 4,4-Ethylendioxy-2,2,6,6-tetramethyl-1H-phosphorinan in 250 ml 3M wässriger HCl und 250 ml Tetrahydrofuran hergestellt und diese bei Raumtemperatur während 20 Std. gerührt. Dann werden zu dieser Lösung 100 ml Wasser zugegeben und das Reaktionsgemisch dreimal mit Diethylether extrahiert. Die vereinigten Etherextrakte werden mit Kochsalzlösung gewaschen und über wasserfreiem Kaliumcarbonat getrocknet. Anschliessend wird das Lösungsmittel im Vakuum entfernt und der Rückstand unter vermindertem Druck destilliert worauf 14.4 g (42 %) einer farblosen Flüssigkeit mit Sdp. 53-56°C (0.9 mm Hg) erhalten werden.
Hochaufgelöstes Messenspektrum:

| | |
|---|---|
| Berechnet für $C_9H_{17}OP$ | 172.1013 |
| Gefunden | 172.1015 |

d) **4-Hydroxy-2,2,6,6-tetramethyl-1H-phosporinan**
In einem flammengetrockneten Kolben wird unter Stickstoff eine Suspension von 9.4 g Lithiumtetrahydroaluminat in 1 Liter trockenem Tetrahydrofuran hergestellt, welche dann mit einer Lösung von 20 g (0.12 Mol) 2,2,6,6-Tetramethyl-1H-phosphorinan-4-on in 140 ml Tetrahydrofuran bei Raumtemperatur versetzt wird. Das Reaktionsgemisch wird während 3 Std. auf 50°C erhitzt, dann auf -15°C abgekühlt und tropfenweise mit 176 ml Wasser versetzt. Die daraus entstehende weisse Suspension wird mit 100 g Magnesiumsulfat behandelt, um überschüssiges Wasser zu entfernen, dann filtriert und gut mit Diethylether nachgewaschen. Das Filtrat wird im Vakuum vom Lösungsmittel befreit und der Rückstand unter vermindertem Druck destilliert (Sdp. 60-64°C bei 0.3 mm Hg), worauf 8.16 g (37 %) einer weissen Substanz vom Smp. 47-50°C erhalten werden.

**Beispiel 2:**

**Bis-(2,2,6,6-tetramethyl-phosphorinan-4-yl)-sebacat**
In einen Kolben, der mit einer Dean-Stark-Falle und einem Dewar-Kühler versehen ist, werden 2.75 g (0.015 Mol) 4-Hydroxy-2,2,6,6-tetramethyl-1H-phosphorinan, 1.65 g (0.0072 Mol) Dimethylsebacat und 6 mg Lithiumhydrid gegeben und die Mischung anschliessend unter Stickstoff auf 70°C erhitzt. Der Druck wird allmählich auf 11 mm Hg vermindert während gleichzeitig die Temperatur auf 170°C erhöht wird. Das Reaktionsgemisch wird chromatographisch getrennt, worauf 1.7 g (47 %) einer weissen Substanz vom Smp. 58-63°C erhalten wird.

| Analyse: | C | H |
|---|---|---|
| Berechnet für $C_{28}H_{52}O_4P_2$ | 65.3 | 10.2 |
| Gefunden | 65.6 | 9.9 |

**Beispiel 3:**

**Bis-(1-oxo-2,2,6,6-tetramethyl-phosphorinan-4-yl)-sebacat**

Zu einer Lösung, hergestellt aus 4 g (0.0078 Mol) Bis-(2,2,6,6-tetramethyl-phosphorinan-4-yl)-sebacat in 40 ml Toluol, wird bei Raumtemperatur unter Rühren eine Lösung von 1.8 g (0.0155 Mol) 30 % Wasserstoffperoxid in 40 ml Wasser zugegeben. Nach Beendigung der Reaktion, wenn das Phosphin umgesetzt ist, (dünnschichtchromatographisch ermittelt) wird das Reaktionsgemisch in einem Scheidetrichter in die zwei Phasen getrennt. Die wässerige Phase wird dreimal mit je 40 ml Chloroform extrahiert. Die vereinigten organischen Phasen werden mit 40 ml destilliertem Wasser gewaschen, über wasserfreiem Natriumsulfat getrocknet und im Vakuum eingeengt. Der Rückstand wird chromatographisch getrennt und ergibt 1.2 g (29 %) weisse, halbfeste Substanz.

Massensprekturm: m/e 546 (berechnet 546).

**Beispiel 4:**

**3,5-Di-tert.-butyl-4-hydroxy-dihydrozimtsäure-(2,2,6,6-tetra-methylphosphorinan-4-yl)-ester**

In einem mit einer Dean-Stark-Falle und mit einem Trockeneis-Kühler versehenen Kolben werden 4.7 g (0.027 Mol) 4-Hydroxy-2,2,6,6-tetramethyl-1H-phosphorinan, 7.9 g (0.27 Mol) Methyl-3,5-di-tert.-butyl-4-hydroxy-dihydrocinnamat und 20 mg Lithiumhydrid gegeben und die Mischung anschliessend unter Stickstoff gerührt und bei 50 mm Hg auf 120-135°C erhitzt bis 1.2 ml (100 % des theoretischen Werts) Destillat übergegangen ist. Das Reaktionsgemisch wird chromatographisch getrennt und ergibt 3.9 g (33 %) einer weissen Substanz vom Smp. 81-84°C.

| Analyse: | C | H | P |
|---|---|---|---|
| Berechnet für $C_{26}H_{42}O_3P$: | 72.0 | 9.8 | 7.1 |
| Gefunden | 72.1 | 9.6 | 6.9 |

**Beispiel 5:**

**4-Hydroxy-1-oxo-2,2,6,6-tetramethyl-1H-phosphorinan**

Die Verbindung dieses Beispiels wird aus dem Rückstand von Beispiel 3 durch chromatographische Trennung erhalten und ergibt 0.8 g (15 %) einer weissen Substanz vom Smp. 185-190°C.

**Beispiel 6:**

**4-[N-(n-Propyl)-amino]-2,2,6,6-tetramethyl-1H-phosphorinan**

a) 4-[N-(n-Propyl)-amino]-1-phenyl-2,2,6,6-tetramethyl-phosphorinan

In einem Kolben wird unter Stickstoff eine Lösung von 12.4 g (0.05 Mol) 1-Phenyl-2,2,6,6-tetramethyl-phosphorinan-4-on 17.7 g (0.30 Mol) n-Propylamin, 1.89 g (0.03 Mol) Natriumcyano-trihydroborat in 20 ml einer 5N methanolischen Salzsäure-Lösung und 150 ml Methanol hergestellt. Das Reaktionsgemisch wird bei Raumtemperatur während 3 Tagen gerührt und dann mit 20 ml konzentrierter Salzsäure versetzt. Darauf wird das Reaktionsgemisch im Vakuum eingeengt und mit 30 ml Wasser und 25 ml Diethylether versetzt. Die Phasen werden getrennt und zu der wässerigen Phase werden 8 g festes Natriumhydroxid zugegeben. Die daraus resultierende basische Phase wird fünfmal mit je 25 ml Diethylether extrahiert. Die vereinigten Extrakte werden über wasserfreiem Natriumsulfat getrocknet und das Lösungmittel im Vakuum entfernt. Der Rückstand wird unter vermindertem Druck destilliert und ergibt 11.2 g (77 %) einer farblosen Flüssigkeit vom Sdp. 140-144°C (0.1 mm Hg).

| Analyse: | C | H | N |
|---|---|---|---|
| Berechnet für $C_{18}H_{30}NP$: | 74.2 | 10.4 | 4.8 |
| Gefunden | 74.3 | 10.4 | 4.6 |

b) 4-[N-(n-Propyl)-amino]-2,2,6,6-tetramethyl-1H-phosphorinan
Die Verbindung des Beispiels 6 a) wurde analog zu dem in Beispiel 1 b) verwendeten Verfahren reduziert. IR: 2280 $cm^{-1}$ (P-H).

**Beispiel 7: Lichtstabilität von Polypropylen**

Unstabilisiertes Polypropylenpulver (Hercules PROFAX® 6501) wird mit 0.2 Gew.-% eines Additivs gemischt. Diese Mischungen werden anschliessend bei 182°C während 5 Minuten in einem Mischwalzwerk plastifiziert. Anschliessend wird die stabilisierte Polypropylenfolie vom Walzwerk abgelöst und auskühlen gelassen. Die Folie wird in Stücke geschnitten und in einer hydraulischen Presse bei 220°C und 12 bar zu einer 0.13 mm dicken Probe verformt. Diese Probe wird ultraviolettem Licht bis zur Zersetzung ausgesetzt. Als Zersetzungszeitpunkt wird diejenige Anzahl Stunden gewertet, bei der die Proben erste Zerfallserscheinungen wie Risse und/oder braune Ecken aufweisen.
Die Messdaten sind in Tabelle 1 wiedergegeben.

**Tabelle 1**

| Additiv | Zahl der Stunden bis zur Zersetzung der Probe |
|---|---|
| Verbindung aus Beispiel 2 | 540 |
| Verbindung aus Beispiel 3 | 450 |
| ohne Additiv | 200 - 300 |

**Beispiel 8: Verarbeitungsstabilität von Polypropylen**

Zu einer Grundrezeptur von 100 Teilen Polypropylen (Hercules PROFAX® 6501) und 0.1 Teil Calciumstearat werden Stabilisatoren in Methylenchlorid-Lösung beigemischt. Anschliessend wird das Lösungsmittel unter vermindertem Druck entfernt und das Harz bei 288° C unter folgenden Extruderbedingungen extrudiert:

| | Temperatur (° C) |
|---|---|
| Cylinder ≠ 1 | 260 |
| Cylinder ≠ 2 | 274 |
| Cylinder ≠ 3 | 288 |
| Düse ≠ 1 | 288 |
| Düse ≠ 2 | 288 |
| Düse ≠ 3 | 288 |

Förderschnecke: 100 Umdrehungen pro Minute.

Während der Extrudierung wird der Innendruck im Extruder mittels eines Druckfühlers gemessen. Nach jeweils der ersten, dritten und fünften Extrudierung werden Harzkugeln bei 193°C zu 3.2 mm dicken Plättchen gepresst und der Yellowness Index (YI) der Probe gemäss ASTM D 1925-63T ermittelt.
Die erhaltenen Werte sind in Tabelle 2 aufgeführt.

**Tabelle 2**

| Additiv | Extrusionstemperatur 288° C Innendruck nach Extrusion (bar) | | | Yl-Farbe nach Extrusion | | |
|---|---|---|---|---|---|---|
| | 1 | 3 | 5 | 1 | 3 | 5 |
| 0.1 % der Verbindung aus Beispiel 4 | 47.57 | 49.64 | 48.61 | 3.5 | 6.9 | 8.1 |
| 0.05 % der Verbindung aus Beispiel 4 + 0.1 % v. Antioxidans A* | 49.99 | 52.06 | 51.71 | 4.4 | 5.2 | 5.6 |
| Ohne Additiv | 39.64 | 38.61 | 35.16 | 3.5 | 3.7 | 3.3 |

*) Neopentyltetraethyl tetrakis-[3-(3,5-di-tert.-butyl-4-hydroxyphenyl)-propionat].

Die angegebenen Werte zeigen die Wirksamkeit des Stabilisierungsvermögens der erwähnten Verbindungen.

**Patentansprüche**

1. Verbindungen der Formel I

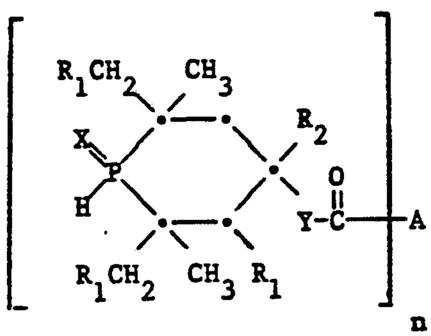

(I)

worin $R_1$ und $R_2$ unabhängig voneinander Wasserstoff oder $C_1$-$C_8$-Alkyl;

X -0-, -S- oder ein freies Elektronenpaar, Y -0- oder $N(R_3)$, worin $R_3$ Wasserstoff oder $C_1$-$C_{12}$-Alkyl ist, bedeuten und worin n = 1-5 ist und worin A n-wertiges $C_1$-$C_{20}$-Alkyl, n-wertiges $C_5$-$C_6$-Cycloalkyl, n-wertiges $C_6$-$C_{20}$-Aryl oder $C_7$-$C_{10}$-Aralkyl, das durch $C_1$-$C_4$-Alkyl und Hydroxyl substituiert ist oder ein n-wertiges Radikal einer 5-7 gliedrigen heterocyclischen Verbindung bedeutet.

2. Verbindungen gemäss Anspruch 1 worin $R_1$ und $R_2$ Wasserstoff bedeuten.

3. Verbindungen gemäss Anspruch 1, worin X -0- oder ein freies Elektronenpaar bedeutet.

4. Verbindungenen gemäss Anspruch 1, worin n = 1 oder 2 ist.

5. Verbindungen gemäss Anspruch 4, worin n = 2 ist.

6. Verbindungen gemäss Anspruch 4, worin n = 1 ist und A $C_1$-$C_8$ -Alkyl oder durch $C_1$-$C_4$ -Alkyl und Hydroxyl substituiertes $C_7$-$C_{10}$-Aralkyl bedeutet.

7. Verbindungen gemäss Anspruch 6, worin A 2-(3,5-Di-tert.-butyl-4-hydroxyphenyl)-ethyl bedeutet.

8. Verbindungen gemäss Anspruch 5, worin A $C_4$-$C_8$ -Alkylen bedeutet.

9. Verbindungen gemäss Anspruch 1, worin Y -0- bedeutet.

10. Bis-(2,2,6,6-tetramethyl-phosphorinan-4-yl)-sebacat, Bis-(1-oxo-2,2,6,6-tetramethyl-phosphorinan-4-yl)-sebacat und 3,5-Di-tert.-butyl-4-hydroxy-dihydrozimtsäure-(2,2,6,6-tetramethyl-phosphorinan-4-yl)-ester gemäss Anspruch 1.

11. Verbindungen der Formel II

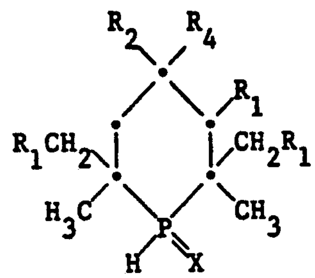

(II),

worin $R_4$ Hydroxyl oder $NHR_3$ bedeutet und $R_1$, $R_2$, $R_3$ und X die in Anspruch 1 angegebene Bedeutung haben.

12. Verbindungen gemäss Anspruch 11, worin $R_1$ und $R_2$ Wasserstoff bedeuten.

13. Verbindungen gemäss Anspruch 11, worin X -0- oder ein freies Elektronenpaar bedeutet.

14. Verbindungen gemäss Anspruch 11, worin $R_4$ Hydroxyl bedeutet.

15. 4-Hydroxy-2,2,6,6-tetramethyl-1H-phosphorinan, 4-Hydroxy-1-oxo-2,2,6,6-tetramethyl-1H-phosphorinan gemäss Anspruch 11.

16. Verwendung von Verbindungen der Formel I zum Stabilisieren von organischem Material aus der Gruppe der Kunststoffe, Elastomere, Harze, Mineralöle und synthetischen Öle.

17. Zusammensetzung enthaltend ein gegen oxidativen, thermischen oder strahlungsinduzierten Abbau empfindliches organisches Material aus der Gruppe der Kunststoffe, Elastomere, Harze, Mineralöle und synthetischen Öle, und mindestens eine Verbindung der Formel I gemäss Anspruch 1.

18. Zusammensetzung gemäss Anspruch 17, worin das organische Material ein synthetisches Polymer ist.

19. Zusanmensetzung gemäss Anspruch 18, worin das synthetische Polymer ein Polyolefin, schlagfestes Polystyrol, Butadienkautschuk, Acrylnitril/ Butadien/Styrol oder Styrol/Butadienkautschuk bedeutet.

20. Verfahren zum Stabilisieren von organischem Material aus der Gruppe der Kunststoffe, Elastomere, Harze, Mineralöle und synthetischen Öle gegen oxidativen, thermischen oder strahlungsinduzierten Abbau, dadurch gekennzeichnet, dass dem Material mindestens eine Verbindung der Formel I gemäss Anspruch 1 zugefügt wird.

**Claims**

1.Compounds of the formula

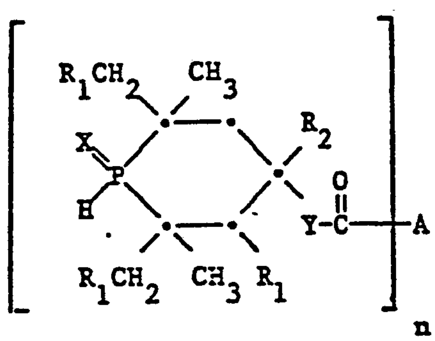

(I)

wherein in

$R_1$ and $R_2$ independently of each other are hydrogen or $C_1$-$C_8$-alkyl;

X is -0-, -S- or a lone pair of electrons; Y is -0- or -$N(R_3)$, where $R_3$ is hydrogen or $C_1$-$C_{12}$-alkyl; n is 1 to 5 and A is n-valent $C_1$-$C_{20}$-alkyl, n-valent $C_5$-$C_6$-cycloalkyl, n-valent $C_6$-$C_{20}$-aryl or $C_7$-$C_{10}$-aralkyl which is substituted by $C_1$-$C_4$-alkyl and hydroxyl, or an n-valent radical of a 5-7-membered heterocyclic compound.

2. Compounds according to Claim 1, wherein $R_1$ and $R_2$ are hydrogen.

3. Compounds according to Claim 1, wherein X is -0-or a lone pair of electrons.

4. Compounds according to Claim 1, wherein n is 1 or 2.

5. Compounds according to Claim 4, wherein n is 2.

6. Compounds.according to Claim 4, wherein n is 1 and A is $C_1$-$C_8$-alkyl or $C_7$-$C_{10}$-aralkyl substituted by $C_1$-$C_4$-alkyl and hydroxyl.

7. Compounds according to Claim 6, wherein A is 2-(3,5-di-tert-butyl-4-hydroxyphenyl)ethyl.

8. Compounds according to Claim 5, wherein A is $C_4$-$C_8$-alkylene.

9. Compounds according to Claim 1, wherein Y is -0-.

10. Bis (2,2,6,6-tetramethyl-phosphorinan-4-yl) sebacate, bis(1-oxo-2,2,6,6-tetramethyl-phosphorinan-4-yl) sebacate and 3,5-di-tert-butyl-4-hydroxy-dihydrocinnamic acid (2,2,6,6-tetramethyl-phosphorinan-4-yl) ester according to Claim 1.

11. Compounds of the formula

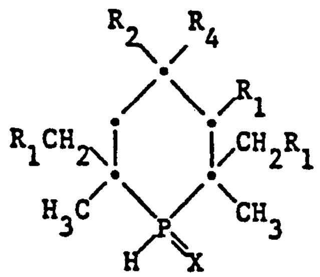

(II)

wherein $R_4$ is hydroxyl or $NHR_3$, and $R_1$, $R_2$, $R_3$ and X are as defined in Claim 1.

12. Compounds according to Claim 11, wherein $R_1$ and $R_2$ are hydrogen.

13. Compounds according to Claim 11, wherein X is -0-or a lone pair of electrons.

14. Compound according to Claim 11, wherein $R_4$ is hydroxyl.

15. 4-Hydroxy-2,2,6,6-tetramethyl-1H-phosphorinane and 4-hydroxy-1-oxo-2,2,6,6-tetramethyl-1H-phosphorinane according to Claim 11.

16. Use of compounds of the formula I for stabilizing organic material from the group of plastics, elastomers, resins, mineral oils and synthetic oils.

17. Composition containing an organic material subject to oxidative, thermal or actinic degradation, said material being from the group of plastics, elastomers, resins, mineral oils and synthetic oils and at least one compound of the formula I according to Claim 1.

18. Composition according to Claim 17, wherein the organic material is a synthetic polymer.

19. Composition according to Claim 18, wherein the synthetic polymer is a polyolefin, impact polystyrene, butadiene rubber, acrylonitrile/butadiene/styrene or styrene/butadiene rubber.

20. Method for stabilizing organic material from the group of plastics, elastomers, resins, mineral oils and synthetic oils against oxidative, thermal or actinic degradation which comprises incorporating into the material at least one compound of the formula I according to Claim 1.

**Revendications**

1. Composés répondant à la formule I:

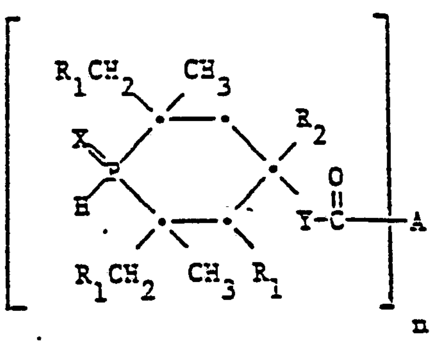

(I)

dans laquelle $R_1$ et $R_2$ représentent chacun, indépendamment l'un de l'autre, l'hydrogène ou un alkyle en $C_1$-$C_8$,
X représente -0-, -S- ou un doublet électronique libre,
Y représente -0- ou un radical $N(R_3)$ dans lequel $R_3$ représente l'hydrogène ou un alkyle en $C_1$ -$C_{12}$,
n représente un nombre de 1 à 5 et
A représente un alkyle en $C_1$ -$C_{20}$ n-valent, un cycloalkyle en $C_5$ ou $C_6$ n-valent, un radical aryle en $C_6$ -$C_{20}$ ou aralkyle en $C_7$ -$C_{20}$ de valence n et éventuellement porteur d'un alkyle en $C_1$ -$C_4$, ou d'un hydroxy, ou un radical n-valent d'un composé hétérocyclique renfermant de 5 à 7 maillons.

2. Composés selon la revendication 1 dans lesquels $R_1$ et $R_2$ représentent chacun l'hydrogène.

3. Composés selon la revendication 1 dans lesquels X représente -0- ou un doublet électronique libre.

4. Composés selon la revendication 1 dans lesquels n est égal à 1 ou à 2.

5. Composés selon la revendication 4 dans lesquels n est égal à 2.

6. Composés selon la revendication 4 dans lesquels n est égal à 1 et A représente un alkyle en $C_1$-$C_8$ ou un aralkyle en $C_7$-$C_{10}$ qui porte un alkyle en $C_1$-$C_4$ et un hydroxy.

7. Composés selon la revendication 6 dans lesquels A représente un radical (di-tert-butyl-3,5 hydroxy-4 phényl)-2 éthyle.

8. Composés selon la revendication 5 dans lesquels A représente un alkylène en $C_4$-$C_8$.

9. Composés selon la revendication 1 dans lesquels Y représente -0-.

10. Composés selon la revendication 1, en l'espèce le sébaçate de bis-(tétraméthyl-2,2,6,6 phosphannyle-4), sébaçate de bis-(oxo-1 tétraméthyl-2,2,6,6 phosphannyle-4) et di-tert-butyl-3,5 hydroxy-4 dihydrocinnamate de tétraméthyl-2,2,6,6 phosphannyle-4).

11. Composés répondant à la formule II:

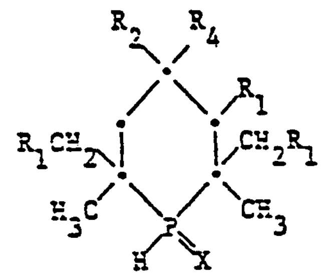

(II),

dans laquelle $R_4$ représente un hydroxy ou un radical $NHR_3$, et $R_1$, $R_2$, $R_3$ et X ont les significations données à la revendication 1.

12. Composés selon la revendication 11 dans lesquels $R_1$ et $R_2$ représentent chacun l'hydrogène.

13. Composés selon la revendication 11 dans lesquels X représente -0- ou un doublet électronique libre.

14. Composés selon la revendication 11 dans lesquels $R_4$ représente un radical hydroxy.

15. Composés selon la revendication 11, en l'espèce l'hydroxy-4 tétraméthyl-2,2,6,6 1H-phosphanne et l'hydroxy-4 oxo-1 tétraméthyl-2,2,6,6 1H-phosphanne.

16. Application de composés de formule I pour la stabilisation de matières organiques du groupe des matières plastiques, des élastomères, des résines, des huiles minérales et des huiles synthétiques.

17. Composition qui contient une matière organique sensible à la dégradation sous l'effet de l'oxydation, de la chaleur ou d'un rayonnement, prise dans l'ensemble constitué par les matières plastiques, les élastomères, les résines, les huiles minérales et les huiles synthétiques, et au moins un composé de formule I selon la revendication 1.

18. Composition selon la revendication 17 dans laquelle la matière organique est un polymère synthétique.

19. Composition selon la revendication 18 dans laquelle le polymère synthétique est une polyoléfine, un polystyrène choc, un caoutchouc de butadiène, un copolymère acrylonitrile/butadiène/styrène ou un caoutchouc styrène/butadiène.

20. Procédé pour stabiliser une matière organique du groupe des matières plastiques, des élastomères, des résines, des huiles minérales et des huiles synthétiques contre la dégradation par l'oxydation, la chaleur ou un rayonnement, procédé caractérisé en ce qu'on ajoute à la matière au moins un composé de formule I selon la revendication 1.